Europäisches Patentamt

European Patent Office

Office européen des brevets

(19)

(11) Veröffentlichungsnummer: **0 283 733 B1**

(12) **EUROPÄISCHE PATENTSCHRIFT**

(45) Veröffentlichungstag der Patentschrift: **22.01.92**

(51) Int. Cl.⁵: **B62D  7/18**, E01C 19/48

(21) Anmeldenummer: **88102532.4**

(22) Anmeldetag: **22.02.88**

(54) **Strassendeckenfertiger.**

(30) Priorität: **25.02.87 DE 8702877 U**

(43) Veröffentlichungstag der Anmeldung:
**28.09.88 Patentblatt  88/39**

(45) Bekanntmachung des Hinweises auf die
Patenterteilung:
**22.01.92 Patentblatt  92/04**

(84) Benannte Vertragsstaaten:
**DE GB IT**

(56) Entgegenhaltungen:
**CH-A- 146 149**
**DE-A- 1 953 770**
**FR-A- 543 124**
**FR-A- 1 212 610**
**US-A- 3 997 277**

(73) Patentinhaber: **ABG-WERKE GmbH**
**Kuhbrückenstrasse 18**
**W-3250 Hameln 1(DE)**

(72) Erfinder: **Heims, Dirk**
**Fritz-Reuter-Weg 1**
**W-3252 Bad Münder 1(DE)**

(74) Vertreter: **Sparing Röhl Henseler Patentan-**
**wälte European Patent Attorneys**
**Rethelstrasse 123**
**W-4000 Düsseldorf 1(DE)**

## Beschreibung

Straßendeckenfertiger, die mit Radfahrwerken ausgestattet sind, weisen in der Regel neben den im hinteren Bereich befindlichen Antriebsrädern (ein oder zwei Antriebsräder auf jeder Seite) im vorderen Bereich unter dem das Einbaumaterial aufnehmenden Kübel je Seite ebenfalls ein oder auch zwei Lenkräder auf.

Um gute Selbstnivellierungseigenschaften, die für einen ebenen Deckeneinbau erforderlich sind, sowie gleichmäßige Lastverteilungen auf die Lenkräder zu erzielen, ist es bekannt, bei Straßendeckenfertigern mit vier Lenkrädern, d.h. zwei Lenkrädern je Seite, die jeweils auf einer Seite befindlichen Lenkräder in einer gemeinsamen längs zur Fahrtrichtung wirkenden Wippe zu lagern. Derartige Konstruktionen sind z.B. aus US-A-3 997 277 bekannt.

Weist der Straßendeckenfertiger zwei Lenkräder auf, d.h. ein Lenkrad je Seite auf, werden diese gewöhnlich starr, d.h. ohne Niveauausgleich mit dem Fertigerrahmen verbunden. Nur in Ausnahmefällen werden sie in einer gemeinsamen Wippe gelagert, die dann jedoch quer zur Fahrtrichtung angeordnet ist. Diese quer zur Fahrtrichtung sich erstreckende Wippe muß zwischen dem Ober- und dem Untertrum der Fördereinrichtung für Einbaumaterial aus dem Kübel zur Einbaubohle in Form von einem oder zwei Kratzerbändern angeordnet werden und von einer zur anderen Seite des Straßendeckenfertigers reichen. Als Folge hiervon ergeben sich große Hebelarme, die sehr hohe Widerstandsmomente aufweisen müssen, denn der Kübel wird mit LKW-Hinterkippern beschickt, die sich auch teilweise je nach Überstand der Ladefläche auf dem Kübelboden derart abstützen, daß sich die Hinterräder des LKWs in der Luft befinden.

Um eine einwandfreie LKW-Beschickung zu ermöglichen, muß der Kübelboden eine möglichst geringe Höhe gegenüber der Fahrbahn aufweisen. Dies wiederum bedingt unter gleichzeitiger Berücksichtigung einer ausreichenden Bodenfreiheit des Straßendeckenfertigers, daß zwischen dem Ober- und Unterkettentrum der Kratzerbänder nur so wenig Platz vorhanden ist, daß eine ausreichende Dimensionierung der quer zur Fahrtrichtung liegenden Wippe nur unter Inkaufnahme erheblicher Nachteile möglich ist. Deshalb wird möglichst auf eine Querwippe verzichtet. Doch sind auch die mit diesem Verzicht verbundenen Nachteile erheblich. Insbesondere dann, wenn insgesamt nur zwei Lenkräder vorgesehen sind, ist wegen der dadurch bewirkten geringen Kontaktfläche zur Fahrbahn ein Niveauausgleich sehr wichtig. Neben den ohne Niveauausgleich erheblich schlechteren Selbstnivellierungseigenschaften kommt es bei relativ losem Fahrbahnuntergrund zum Einsinken des jeweils höher belasteten Lenkrades, bis in Extremfällen ein Lenkrad überhaupt keinen Bodenkontakt mehr hat. Dies führt zu Traktionsproblemen, Unebenheiten in der verlegten Decke und durch das Hochdrücken des Fahrbahnuntergrundes im Bereich der Peripherie des Lenkrades auch zu einer nicht homogenen Decke.

Aufgabe der Erfindung ist es daher, einen Straßendeckenfertiger zu schaffen, der einen Niveauausgleich der Lenkräder ermöglicht, der den beim Beschickungsvorgang auftretenden Kräften und erforderlichen Abmessungen gerecht wird und zugleich die für eine Lenkeinrichtung notwendigen Schwenkbewegungen in platzsparender Weise und konstruktionsmäßig einfach mit übernimmt.

Diese Aufgabe wird gelöst durch einen Straßendeckenfertiger mit einem im vorderen Bereich angeordneten Kübel zur Aufnahme von Einbaumaterial, einer Einbaubohle, der Einbaumaterial aus dem Kübel über eine Transporteinrichtung zuführbar ist, und einem von einem Rahmen getragenen Radfahrwerk mit Lenkrädern, die Achsschenkel aufweisen, die über horizontal drehbare Achsschenkelbolzen am Rahmen angelenkt sind, wobei die Achsschenkelbolzen der Lenkräder vertikal verschiebbar und horizontal drehbar geführt und am oberen Ende als Kolbenstange ausgebildet von einem ölgefüllten Hydraulikzylindergehäuse aufgenommen sind, wobei die Hydraulikzylindergehäuse quer zur Fahrtrichtung und gegebenenfalls längs zur Fahrtrichtung durch Ausgleichsleitungen miteinander verbunden sind.

Hierbei ist es insbesondere zweckmäßig, wenn die Achsschenkelbolzen am unteren Ende von Widerlagern aufgenommen sind, die eine Durchtrittsöffnung für den Achsschenkelbolzen aufweisen.

Außerdem kann das Hydraulikzylindergehäuse und gegebenenfalls das Widerklager Gleitführungslager aufweisen.

Die Erfindung wird nachstehend anhand des in den beigefügten Abbildungen dargestellten Ausführungsbeispiels näher erläutert.

Fig. 1 zeigt ausschnittweise einen Straßendeckenfertiger im Bereich des vorderen Radfahrwerks, teilweise im Schnitt,

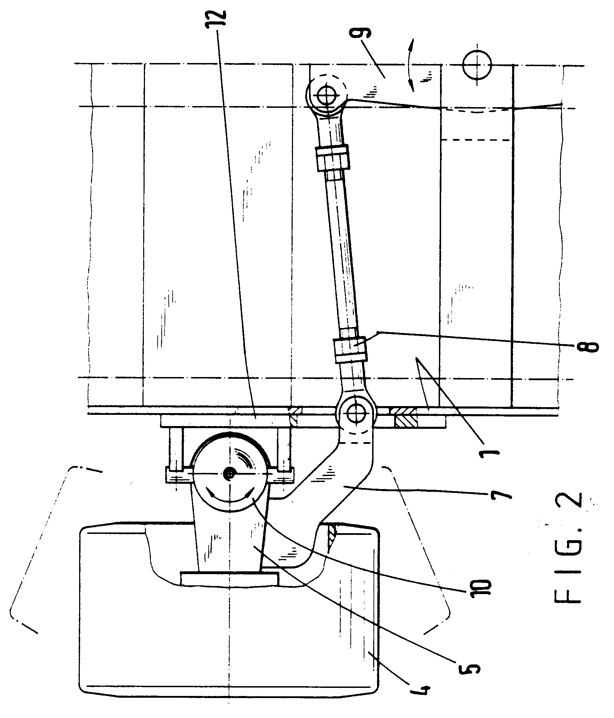

Fig. 2 zeigt eine Ansicht "X" von Fig. 1.

Der dargestellte Straßendeckenfertiger besitzt einen Rahmen 1, der im vorderen Bereich einen Kübel 2 zur Aufnahme von Einbaumaterial trägt. Kratzerkettenbänder 3 dienen zum Zuführen von Einbaumaterial aus dem Kübel 2 zu einer nicht dargestellten Einbaubohle. Ferner ist der Rahmen 1 mit einem Radfahrwerk versehen, das zwei Lenkräder 4 aufweist, die unterhalb des Kübels 2 angeordnet sind. Die Lenkräder 4 besitzen horizontale Achsschenkel 5, die vertikale Achsschenkelbolzen 6 tragen. Die Achsschenkel 5 sind über Hebel 7 mit Spurstangen 8 gelenkig verbunden, wobei die Spurstangen 8 gelenkig mit einem Lenkerarm 9 verbunden sind.

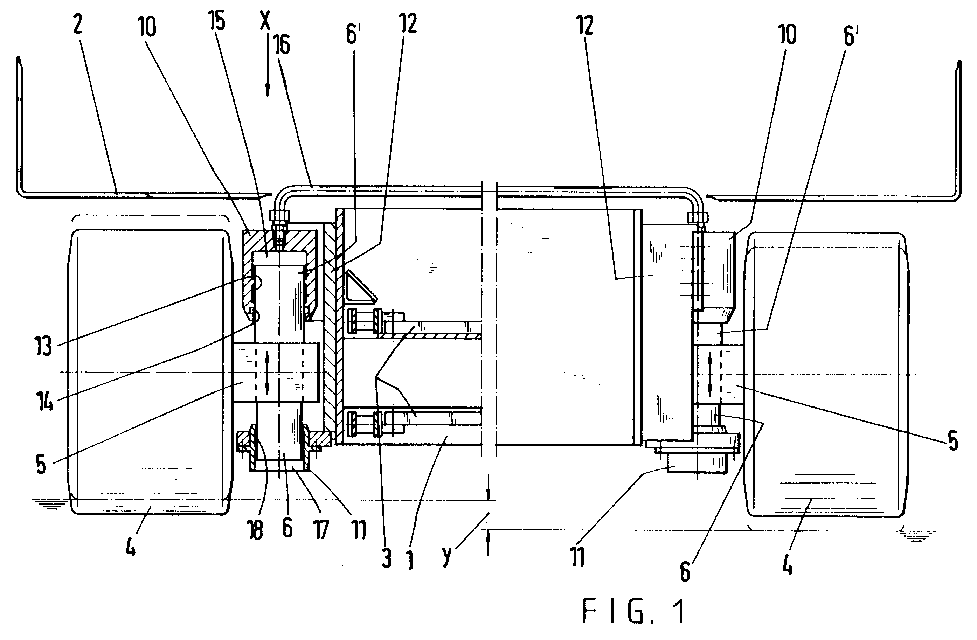

Die Achsschenkelbolzen 6 der Lenkräder 4 sind am oberen Ende als Kolbenstange 6' ausgebildet und werden von einem Hydraulikzylindergehäuse 10 vertikal verschiebbar mit ihrem oberen Ende aufgenommen. Das untere Ende der Achsschenkelbolzen 6 wird von Widerlagern 11 aufgenommen. Der Rahmen 1 trägt Gabeln 12, an denen jeweils ein Hydraulikzylindergehäuse 10 und ein Widerlager 11 vorzugsweise über Schrauben befestigt sind. Das Hydraulikzylindergehäuse 10 besitzt eine Gleitführungsdichtung 13 für die Kolbenstange 6' ebenso wie eine Dichtung 14 hierfür. Eine durch das Hydraulikzylindergehäuse 10 und die Kolbenstange 6' gebildete Ölkammer 15 ist mit Öl gefüllt und über eine Ausgleichsleitung 16 (die in Fig. 1 in die Zeichenebene gedreht dargestellt ist) mit der Ölkammer 15 des auf der gegenüberliegenden Seite des Staßendeckenfertigers befindlichen Hydraulikzylindergehäuses 10 verbunden.

Das Widerlager 11 ist von unten in eine Öffnung der Gabel 12 eingesetzt und besitzt eine Durchtrittsöffnung 17 für den Achsschenkelbolzen 6 und nimmt ein Gleitführungslager 18 für den Achsschenkelbolzen 6 auf.

Infolge der Ausgleichsleitungen 16 ergibt sich bei einem Niverauunterschied ein Niveauausgleich y, wobei sich die Achsschenkelbolzen 6 entsprechend in vertikaler Richtung verstellen. Da das Hydraulikzylindergehäuse 10 und das Widerlager 11 den Achsschenkelbolzen 6 horizontal drehbar aufnehmen, sind die Lenkräder 4 über den Lenkarm 11 lenkbar.

Wenn auf jeder Seite zwei Lenkräder hintereinander angeordnet sind, werden die zugehörigen längs zur Fahrtrichtung hintereinander befindlichen Hydraulikzylindergehäuse 10 ebenfalls durch Ausgleichsleitungen 16 miteinander verbunden, um auch einen Niveauausgleich zwischen in Fahrtrichtung hintereinander befindlichen Lenkrädern 4 zu bewirken.

**Patentansprüche**

1. Straßendeckenfertiger mit einem im vorderen Bereich angeordneten Kübel (2) zur Aufnahme von Einbaumaterial, einer Einbaubohle, der Einbaumaterial aus dem Kübel über eine Transporteinrichtung (3) zuführbar ist, und einem von einem Rahmen (1) getragenen Radfahrwerk mit Lenkrädern (4), die Achsschenkel (5) aufweisen, die über horizontal drehbare Achsschenkelbolzen (6) am Rahmen (1) angelenkt sind, **dadurch gekennzeichnet**, daß die Achsschenkelbolzen (6) der Lenkräder (4) vertikal verschiebbar und horizontal drehbar geführt und am oberen Ende als Kolbenstange (6') ausgebildet von einem ölgefüllten Hydraulikzylindergehäuse (10) aufgenommen sind, wobei die Hydraulikzylindergehäuse (10) quer zur Fahrtrichtung und gegebenenfalls längs zur Fahrtrichtung durch Ausgleichsleitungen (16) miteinander verbunden sind.

2. Straßendeckenfertiger nach Anspruch 1, **dadurch gekennzeichnet**, daß die Achsschenkelbolzen (6) am unteren Ende von Widerlagern (11) aufgenommen sind, die eine Durchtrittsöffnung (17) für den Achsschenkelbolzen (6) aufweisen.

3. Straßendeckenfertiger nach Anspruch 1 oder 2, **dadurch gekennzeichnet**, daß das Hydraulikzylindergehäuse (10) und gegebenenfalls das Widerlager (11) Gleitführungslager (13, 18) aufweisen.

**Claims**

1. Road surfacing machine having a hopper (2) arranged in the front region to receive material being installed, an installation beam to which material being installed can be fed from the hopper by way of a conveyor device (3), and a wheel unit which is carried by a frame (1) and has steering wheels (4) which have steering stub axles (5) linked to the frame (1) by way of horizontally rotatable steering stub axle bolts (6), characterised in that the steering stub axle bolts (6) of the steering wheels (4) are arranged to be vertically displaceable and horizontally rotatable and, constructed at the upper end as a piston rod (6'), are received by an oil-filled hydraulic cylinder housing (10), the hydraulic cylinder housings (10) being connected to one another, transversely to the direction of travel and optionally longitudinally to the direction of travel, by means of equalising lines (16).

2. Road surfacing machine according to Claim 1, characterised in that the steering stub axle bolts (6) are received at their lower end by counter bearings (11) which have an opening (17) for the passage of the steering stub axle bolts (6).

3. Road surfacing machine according to Claim 1 or 2, characterised in that the hydraulic cylinder housing (10) and optionally the counter bearing (11) have sliding guide bearings (13,18).

**Revendications**

1. Finisseur comportant une trémie (2) disposée à l'avant et destinée à recevoir du matériau de mise en oeuvre, une barre lisseuse vers laquelle le matériau provenant de la trémie est acheminé par l'intermédiaire d'un convoyeur (3), et un système de direction porté par un châssis (1) et comportant des roues directrices (4) munies de fusées d'essieu (5) articulées sur le châssis (1) par l'intermédiaire de pivots orientables horizontalement (6), caractérisé par le fait que les pivots (6) porte-fusée des roues directrices (4) sont mobiles verticalement et orientables horizontalement et réalisés à leur extrémité supérieure en forme de tiges de piston (6') pénétrant dans une chambre de vérin hydraulique (10) remplie d'huile, lesdites chambres (10) étant reliées l'une à l'autre, transversalement au sens de déplacement du finisseur et éventuellement dans le sens de déplacement, par des canalisations d'équilibrage (16).

2. Finisseur selon la revendication 1, caractérisé par le fait que les pivots (6) porte-fusée sont supportés à leur extrémité inférieure par des contre-paliers (11) qui sont munis d'un orifice de passage (17) pour lesdits pivots (6).

3. Finisseur selon la revendication 1 ou 2, caractérisé par le fait que la chambre de vérin hydraulique (10') et éventuellement le contre-palier (11), sont équipés de paliers de guidage lisses (13,18).

FIG. 1

EP 0 283 733 B1

FIG. 2